# EUROPEAN PATENT APPLICATION

(11) **EP 4 700 423 A1**
(43) Date of publication of application: **25.02.2026**
(21) Application number: 24196326.3
(22) Date of filing: 24.08.2024
(51) Int. Cl.: G01S 7/02, G01S 7/03, G01S 13/42, G01S 13/90, H01Q 1/52, H01Q 21/24

(54) **RADAR SYSTEM FOR 2D AND 3D POSITION MEASUREMENT AND ASSOCIATED METHOD**

(71) Applicant: Alika Technologies, S.L., 50018 Zaragoza (ES)
(72) Inventor: ANDRÉS SALUEÑA, Salvador, 50009 ZARAGOZA (ES); HERAS VILA, Carlos David, 50002 ZARAGOZA (ES); OCABO BAS, Andrés, 50001 ZARAGOZA (ES); LANZUELA GONZALVO, Jorge, 50003 ZARAGOZA (ES); SALINAS ARIZ, Iñigo, 50009 ZARAGOZA (ES); ALONSO ESTEBAN, Rafael, 50001 ZARAGOZA (ES); VILLAFRANCA VELASCO, Asier, 50001 ZARAGOZA (ES)
(74) Representative: Elion IP, S.L.

(57) **Abstract**

A radar system (1a, 1b, 1c, 1d, 1e) comprising:
- a polarised emitting antenna (10) for radiating a signal;
- a plurality of receiving antennas (11, 12, 13, 14, 15) for receiving the signal emitted by the emitting antenna; and
- a radar processor (20) for analysing and processing the signal emitted by the emitting antenna and the signals received at the plurality of receiving antennas; wherein
- the plurality of receiving antennas is aligned in at least one axis (31, 32) and comprises at least three antennas, distributed along the at least one axis;
- a first receiving antenna (11) of the plurality of receiving antennas is arranged with respect to the emitting antenna to shield at least one antenna of the rest of the plurality of receiving antennas;
- the at least one receiving antenna shielded by the first receiving antenna has parallel-polarisation orientation with respect to the emitting antenna, and the rest of receiving antennas has cross-polarisation orientation with respect to the emitting antenna.

## Description

### TECHNICAL FIELD

The present disclosure is applicable to radars, and particularly, to interferometer-type radars.

### BACKGROUND

In continuous wave radars, such as frequency modulated continuous wave radars, the range limit of the radar is generally limited by the coupling level between the transmitting, Tx, and the receiving, Rx, stages. The range of the radar is determined by the Signal to Noise Ratio, SNR, received on each antenna. An emitting antenna Tx comprises a main lobe and secondary lobes; these secondary lobes (also called "sidelobes") usually represent unwanted radiation in undesired directions, and cause coupling between antennas.

A possible way to increase the range of the radar system is to increase the emitted power. However, when the power emitted in the transmitting antenna, Tx, is increased, the level of coupling Rc is also increased. If the coupling level Rc is lower than the system noise Rs, the noise level N (N=Rc+Rs) remains approximately constant and the ratio between the signal level S and the noise level N, SNR, increases, thereby increasing the range. However, when the coupling level Rc is equal or higher to the noise level of the system, Rs, the noise N also increases in the same proportion as the S signal level increases, so the SNR does not improve. Therefore, the point that limits the maximum power emitted by the radar system, which effectively improves the SNR and therefore increases the range of the system, is the point at which the coupling level is equal or greater than the noise level Rs of the system.

One way to reduce the level of coupling is to separate the Tx and Rx antennas. Another possible option is to include absorbent materials between the transmitting Tx and the receiving Rx antennas. However, in applications where small sizes or portability are required, neither option is possible.

In conventional radars, another way to reduce coupling is to work with cross-polarised antennas. However, this solution also reduces the signal level coming from the target object and detected by the radar in case of target objects which do not significantly modify the polarisation of the reflected wave, thereby not increasing the SNR nor the range of the system.

### SUMMARY

The radar system of the present disclosure proposes a radar system that allows increasing the power emitted by the emitting antenna and overcoming the limitations imposed by the coupling on the receiving antennas.

According to the present disclosure, the proposed radar system allows increasing the power emitted by the emitting module or emitting antenna, and overcomes the limitations imposed by the coupling of antennas in the existing radar systems.

The disclosure relates to a radar system, comprising:
- an emitting antenna configured for radiating a signal, the emitting antenna being polarised;
- a plurality of receiving antennas configured for receiving the signal emitted by the emitting antenna; and
- a radar processor for analysing and processing the signal emitted by the emitting antenna and the signals received at the plurality of receiving antennas.

According to a first aspect of the disclosure:
- the plurality of receiving antennas is aligned in at least one axis;
- the plurality of receiving antennas comprises at least three antennas, distributed along the at least one axis;
- a first receiving antenna of the plurality of receiving antennas is arranged with respect to the emitting antenna so as to shield at least one antenna of the rest of the plurality of receiving antennas;
- the at least one receiving antenna shielded by the first receiving antenna has parallel-polarisation orientation with respect to the emitting antenna, and the rest of receiving antennas has cross-polarisation orientation with respect to the emitting antenna.

In the proposed radar system:
- Coupling of the transmitting antenna to the crossed-polarised receiving antenna(s), which due to their location would have high coupling, is minimised by polarisation. This way, the power emitted by the Tx can be increased, until again the limit is reached where the coupling level is equal to the noise.
- In the at least one receiving antenna with parallel polarisation, which by location have zero or low coupling, if the power emitted by the emitting antenna is increased, the received signal is also increased without significantly increasing the coupling signal, thereby increasing the signal to noise ratio SNR of the signal, and therefore the range of the radar system.
- In the receiving antenna(s) having cross-polarisation with respect to the emitting antenna, coupling is low or null, even if these receiving antenna(s) could have high coupling due to their locations, if the cross-polarisation is maintained with respect to the emitting antenna, the resulting coupling is null or almost null. The useful signal of the(se) receiving antenna(s) is also low in case of objects which do not significantly modify the polarisation of the reflected signal with respect to the emitted signal.

The receiving antennas are placed in such an arrangement to ensure the correct shielding effect of the crossed-polarised receiving antennas on the parallel-polarised receiving antennas.

The rest of receiving antennas having cross-polarisation orientation with respect to the emitting antenna comprises all receiving antennas but those receiving antennas that are shielded by the first receiving antenna, including the first receiving antenna that acts as shield. Thus, the rest of receiving antennas may comprise only the first receiving antenna, or may comprise the first receiving antenna and other receiving antenna(s) not being shielded by the first receiving antenna.

And all the shielded receiving antennas (that is, all the receiving antennas shielded by the first receiving antenna) have parallel-polarisation to that of the emitted signal, except the first antenna, which acts as shield and has cross-polarisation.

In the context of the present disclosure, the at least three antennas being distributed along at least one axis means that the at least three antennas are essentially aligned along the at least one axis, which also comprises slight deviations the perfect alignment.

In the context of the present disclosure, the term polarised antenna typically refers to the antenna being linearly polarised.

In certain embodiments, the at least three receiving antennas in the at least one axis are non-uniformly distributed, or a multiplicity of linearly distributed receiving antennas with a non-equidistant separation between them. That is, the at least one axis comprises a nonuniform linear receiving antenna array comprising at least three receiving antennas. A nonuniform linear array configuration is advantageous in that it permits estimating an angle of arrival (AoA) with a given error with a smaller number of antenna elements in the receiving antenna array that would be the case with a uniform linear array, provided that the correct algorithm is used.

In certain embodiments, this receiving antenna array has an inter-antenna spacing which is typically greater than half-wavelength of the signal emitted by the emitting antenna, or emitting signal. Using a distance between the receiving antennas which is greater than half the wavelength facilitates implementing the algorithms for determining the angle(s) of arrival, for example, MLBI algorithms.

In some embodiments the radar system comprises at least five receiving antennas, which are arranged in two essentially orthogonal axes. Using at least five receiving antennas arranged along two orthogonal axes allows providing a precise 3D position.

In embodiments of the radar system comprising at least five receiving antennas, one antenna of the receiving antennas can be common to both orthogonal axes.

The receiving antennas can be arranged in a T-shaped configuration. In this T-shaped configuration of the receiving antennas, one antenna of the receiving antennas is common to both essentially orthogonal axes, and thus, is part of two arrays of antennas, each array having at least three-antennas. Further, this common antenna is located between two receiving antennas at least in one axis of the two essentially orthogonal axes. This configuration facilitates having the most receiving antennas being shielded by the first receiving antenna.

The receiving antennas can be arranged in an L-shaped configuration. In this L-shaped configuration of the receiving antennas, one antenna of the receiving antennas is common to both essentially orthogonal axes, and thus, is part of two arrays of antennas, having each array at least three-antennas. Further, this common antenna is located at an end of each of the two essentially orthogonal axes.

The first receiving antenna can be chosen to be one antenna of the plurality of receiving antennas which is located closest to the emitting antenna. This way, the first receiving antenna is capable of shielding a big number of receiving antennas. The closer the first receiving antenna is to the emitting antenna, the bigger the area shielded by the first receiving antenna, which in turn increases the likelihood that a receiving antenna is within the area shielded by the first receiving antenna. If the polarisation between the emitting antenna and the first receiving antenna are perfectly orthogonal, the first receiving antenna can be as close to the emitting antenna as desired; but in case the polarisation is not perfectly orthogonal, the first receiving antenna will also be subject to coupling from the emitting antenna, and thus, a compromise between coupling and shielding for this first receiving antenna needs to be met.

In certain embodiments, the first receiving antenna is located at one end of the at least one axis, or at the end of any of the two essentially orthogonal axes.

In certain embodiments the number of receiving antennas shielded by the first receiving antenna is at least half plus one of the plurality of receiving antennas, that is, at least the majority of receiving antennas are shielded by the first receiving antenna. As many receiving antennas as possible, and preferably all receiving antennas (but the first receiving antenna) are shielded by the first receiving antenna, which results in a more precise determination of the distance frequency f_{d}.

In some embodiments, the emitting antenna is located on the at least one axis, that is, aligned with the first receiving antenna. Having the emitting antenna aligned with the first receiving antenna improves shielding of secondary lobes of the emitting signal by the first receiving antenna.

Some embodiments of the radar system comprise only one emitting antenna, which is advantageous in terms of cost and simplicity. Having a single emitting antenna provides a simple and cost-effective configuration, which results in quite precise detection at high speed, since the detection algorithm is simpler -and faster- than if two or more emitting antennas are provided. It is also possible to have two or more emitting antennas, which increases the precision of the detection algorithm. An example of suitable detection algorithm is, but without limitation, Multi-Long Baseline Interferometry, MLBI.

In embodiments, the emitting antenna and the plurality of receiving antennas all located on a same plane, which simplifies mounting the antennas on a support plate or board where the radar system is to be built.

In some embodiments, the radar system comprises a further receiving antenna, this further receiving antenna being in addition to the at least three or at least five receiving antennas. This further receiving antenna is not located on the at least one axis or on the two essentially orthogonal axis. This further receiving antenna avoids ambiguities, and therefore, helps improving precision on the detection of the angle(s) of arrival. In case this further receiving antenna is not shielded by the first receiving antenna, this further receiving antenna has cross-polarisation with respect to the emitting antenna. If this further receiving antenna is shielded by the first receiving antenna, this further receiving antenna has parallel polarisation with respect to the emitting antenna.

The signal (or wave) emitted by the emitting antenna is typically an RF signal (or RF wave), preferably a Frequency Modulated Continuous Wave (FMCW) signal. Using an FMCW signal for modulation purposes simplifies the determination of distance by the radar processor. Further, using an FMCW wave provides the radar system with the ability to provide accurate range and velocity measurements.

In embodiments, the radar processor is configured to carry out a Multi-Long Baseline Interferometry (MLBI) algorithm for providing 3D measurements of an object located within an area covered by the radar system. Using an MLBI algorithm allows to obtain a 2D measurement (distance and one angle of arrival) using just three receiving antennas, and a 3D measurement (distance and two angles of arrival) using only five receiving antennas. Other techniques or algorithms -such as MIMO or beamforming- for obtaining angles of arrival require more than five antennas (usually many more).

The signal emitted by the emitting antenna can be in a frequency range between 1 GHz and 26 GHz, which are commercially available frequency ranges, compatible with the optical type scattering behind the Raileigh curve, facilitating classification of the signal by power criteria, which is not spurred by diffraction effects. Typically, the FMCW signal bandwidth ranges from 100 kHz to 2 GHz, depending on the specific carrier frequency band and the desired resolution in terms of distance and velocity.

A second aspect of the present disclosure relates to a method for radar, the method comprising the steps of:
- emitting a polarised signal;
- receiving, by a plurality of receiving antennas comprising at least three antennas arranged in alignment in at least one axis, a reflected signal, the reflected signal being the emitted polarised signal after reflection by an object;
   wherein
- the emitting is carried out by an emitting antenna,
- a first receiving antenna of the plurality of receiving antennas shields at least one of the plurality of receiving antennas from the emitted polarised signal;
- the at least one receiving antenna shielded by the first receiving antenna has parallel-polarisation orientation with respect to the emitting antenna, and the rest of receiving antennas has cross-polarisation orientation with respect to the emitting antenna.

The method for radar can further comprise the steps of:
- processing, by a radar processor, the signals reflected by an object and received at each one of the receiving antennas to determine a distance and an angle of arrival, and
- determining a position of the object in at least two dimensions based on the determined distance and angle of arrival.

In certain embodiments, the plurality of receiving antennas comprises at least five receiving antennas which are arranged in two essentially orthogonal axes. One antenna of the plurality of receiving antennas can be common to both orthogonal axes.

When at least five receiving antennas are used, the method for radar is capable of determining a position of the object in three dimensions, the 3D position comprising two angles of arrival and distance.

The step of processing the signals reflected by the object and received at each one of the receiving antennas can comprise:
- identifying a distance frequency, f_{d}, at which the reflected signal is received by applying a Fourier Transform (FT) algorithm to the reflected signals received through the at least one shielded receiving antennas;
- obtaining a phase for each one of the reflected signals received through all the receiving antennas by bandpass filtering the reflected signals received through all the receiving antennas, the bandpass filtering having a centre frequency corresponding to the identified distance frequency f_{d}; and
- determining the angle of arrival AoA, of each of the reflected signals relative to the normal direction of the receiving antennas based on the corresponding obtained phases.

That is, from the signals received by the receiving antennas having parallel polarisation, the presence of objects and their distance can be determined by applying an FT algorithm to the received signal in order to determine the distance frequency f_{d}. The at least one shielded receiving antenna is used for applying the FT algorithm for calculating the frequency spectrum of the received signal at such antenna for obtaining a distance frequency f_{d}.

The method for radar can further comprise identifying a velocity frequency, fᵥ, corresponding to phase changes in the distance frequency, f_{d}, due to the velocity of the object. The distance frequency f_{d} and the velocity frequency fᵥ are coupled to each other.

In embodiments, the method for radar implements a Multi-Long Baseline Interferometry (MLBI) algorithm for processing the received reflected signal and obtaining the angle of arrival, AoA, or a direction of arrival, DoA, can also be obtained. It is also possible to use other algorithms (such as Kalman filter) for filtering and feature extraction algorithms for processing the received reflected signal.

That is, considering that the object-reflected signal detected in the receiving antennas having cross-polarisation is low, with a low SNR imposed by the system noise Rs, a fact that hinders the effectiveness of the FT algorithm on the signal. To improve its SNR, a narrow filter algorithm is applied directly on these signals at the distance frequency (or frequencies) f_{d} determined in the parallel polarisation antennas. Thus, the received signal is filtered directly at the distance frequency f_{d}, improving its SNR to determine the phase of the signal coming from the distance to the object for subsequently applying an algorithm for obtaining the angle(s) of arrival, such as the MLBI algorithm.

In certain embodiments of the method of radar the plurality of receiving antennas comprises at least five receiving antennas which are arranged in two essentially orthogonal axes one of the receiving antennas being preferably common to both orthogonal axes. As already indicated, having at least five receiving antennas allows for obtaining 3D position.

The method for radar can be a computer-implemented method that runs in one or more processing devices, such as the radar processor, in an isolated manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run.

A third aspect relates to a method for making a radar system, the method comprising:
- arranging an emitting antenna for radiating a polarised signal,
- arranging a plurality of receiving antennas for receiving the signal emitted by the emitting antenna;
wherein the method comprises:
- aligning at least three receiving antennas along at least one axis;
- arranging a first receiving antenna of the plurality of receiving antennas to shield at least one antenna of the plurality of receiving antennas;
- polarising the receiving antennas shielded by the first receiving antenna parallelly with respect to the emitting antenna, and
- polarising the rest of receiving antennas orthogonally with respect to the emitting antenna.

Aligning the at least three receiving antennas along at least one axis can comprise aligning at least five antennas in two essentially orthogonal axes.

In any of the above disclosed method, the emitting antenna, the first receiving antenna and the plurality of receiving antennas are according to the radar system of the first aspect.

The method for making a radar system can be a computer-implemented method that runs in one or more processing devices.

According to a further aspect of the present disclose, a radar system comprises:
- an emitting antenna configured for radiating a signal, the emitting antenna being polarised;
- a plurality of receiving antennas configured for receiving the signal emitted by the emitting antenna ; and
- a radar processor for analysing and processing the signal emitted by the emitting antenna and the signals received at the plurality of receiving antennas;
wherein:
- the plurality of receiving antennas comprises at least five antennas, and are which are arranged in two orthogonal axes;
- a first receiving antenna of the plurality of receiving antennas is arranged with respect to the emitting antenna so as to shield at least a number of the receiving antennas, the number of receiving antennas shielded by the first receiving antenna being at least one antenna of the plurality of receiving antennas;
- the receiving antennas shielded by the first receiving antenna have parallel-polarisation orientation with respect to the emitting antenna, and the rest of receiving antennas has cross-polarisation orientation with respect to the emitting antenna.

The different aspects and embodiments defined in the foregoing may be combined with one another, as long as they are compatible with each other.

Additional advantages and features of the present disclosure will become apparent from the detail description that follows and will be particularly pointed out in the appended claims.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a block diagram of a possible example of the radar system, with three receiving antennas.
Figure 2 shows a block diagram of a possible example of the radar system, with five receiving antennas in a T-shaped configuration.
Figure 3 shows a block diagram of a possible example of the radar system, with five receiving antennas in an L-shaped configuration.
Figure 4 shows a block diagram of another possible example of the radar system, with five receiving antennas in an L-shaped configuration.
Figure 5 shows a block diagram of another possible example of the radar system, with six receiving antennas in an L-shaped configuration.
Figure 6 schematically shows the distance and angles of arrival to an object as determined by the radar system.
Figure 7 shows a flow diagram of a method for radar.
Figure 8 shows a flow diagram of the processing carried out by the radar processor.
Figure 9 shows a flow diagram of a method for making a radar system.

### DETAILED DESCRIPTION

The following description is not to be taken in a limiting sense but is given solely for the purpose of describing the broad principles of the present disclosure. Embodiments thereof will be described by way of example, with reference to the above-mentioned drawings.

The radar system of the present disclosure proposes a solution to known radar systems, for example, to MLBI radar systems using FMCW as modulating signal. The proposed radar system allows increasing the power emitted by the emitting antenna and overcoming the limitations imposed by the coupling on the receiving antennas.

As will be seen in the following examples, the proposed radar system uses a combination of several receiving antennas oriented in parallel polarisation and in cross polarisation, using a cross-polarisation antenna as a shield for the parallel polarisation antennas; the several receiving antennas being placed in such a way that a correct shielding effect of the cross-polarised antenna on the parallel-polarised antennas is assured.

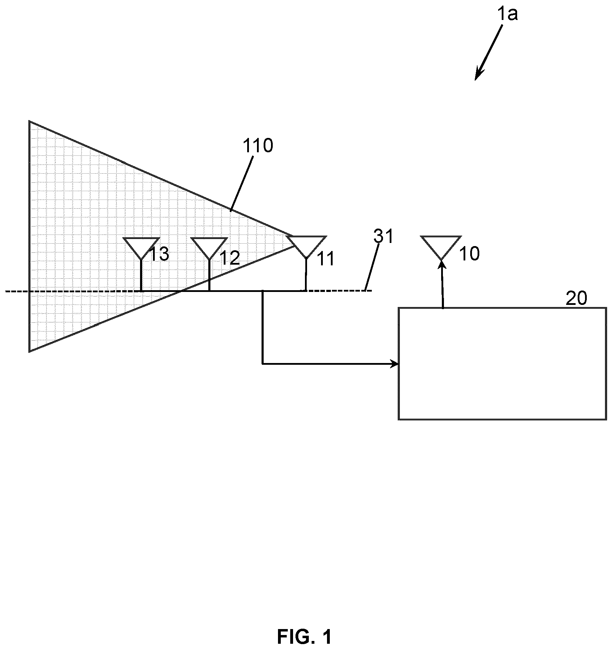

Figure 1 shows a block diagram of a possible example of a radar system 1a. The radar system 1a has an emitting antenna 10, three receiving antennas 11, 12, 13 and a radar processor 20. Typically, the receiving antennas are identical.

The three receiving antennas are arranged non-uniformly along one axis 31. In this example, the emitting antenna 10 is also arranged along the same axis 31 (horizontal axis in the example shown).

The receiving antenna 11 located closest to the emitting antenna 10 is configured to have cross-polarisation with respect to the emitting antenna 10; this way, its coupling to the emitting antenna is minimised.

This receiving antenna 11 acts as shield for the other two receiving antennas 12,13. For this reason, these other two receiving antennas 12,13 have parallel polarisation to that of the emitting antenna 10, so as to maximise reception of the signal reflected from objects by parallel polarisation with the emitting antenna. The area providing shield for the other two receiving antennas has been depicted as the shielded area 110.

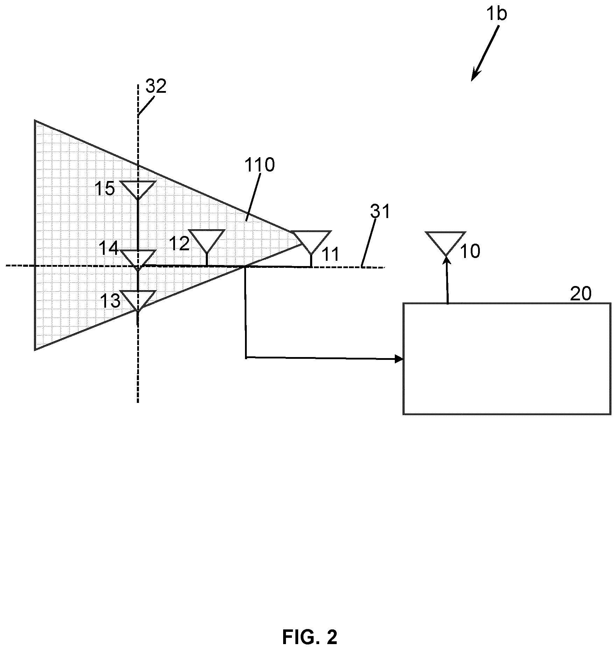

Figure 2 shows a block diagram of another possible example of radar system 1b. The radar system 1b has an emitting antenna 10, five receiving antennas 11, 12, 13, 14, 15 and a radar processor 20.

Three receiving antennas 11, 12, 14 of the five receiving antennas are arranged along one axis 31, a horizontal axis as shown in this Figure 2. In this example, the emitting antenna 10 is also arranged along the same horizontal axis 31. Three receiving antennas 13, 14, 15 of the five receiving antennas are arranged along another axis 32, a vertical axis as shown in Figure 2, which is essentially orthogonal to the axis 31.

The five receiving antennas are arranged in a T-shaped configuration, one of the receiving antennas 14 being common to both axes 31, 32, and being located between two other receiving antennas located, in this example, along the vertical axis 32.

As in the previous example, the receiving antenna 11 located closest to the emitting antenna 10 has cross-polarisation with respect to the emitting antenna 10, whereby coupling to the emitting antenna is minimised.

This receiving antenna 11 acts as shield for all the other four receiving antennas 12,13, 14,15. For this reason, these other four receiving antennas 12,13, 14, 15 have parallel polarisation to that of the emitting antenna 10, so as to maximise reception of the signal reflected from objects by parallel polarisation with the emitting antenna. The area providing shield for the other two receiving antennas has been depicted as the shielded area 110.

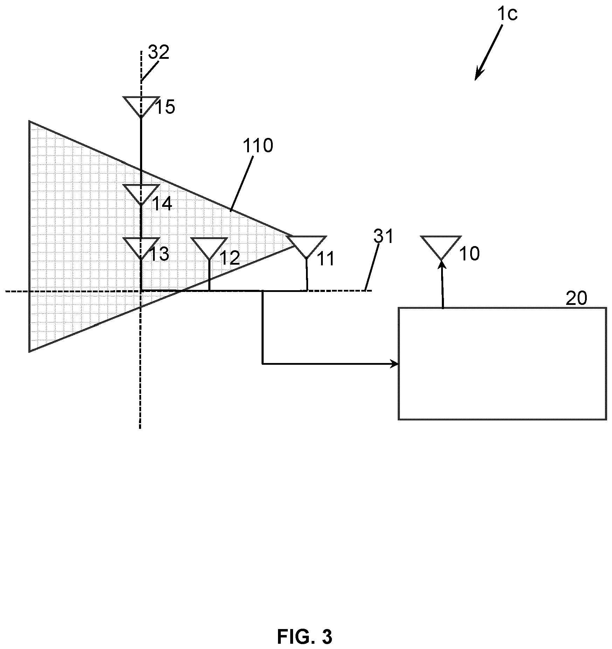

Figure 3 shows a block diagram of another possible example of radar system 1c. The radar system 1c has an emitting antenna 10, five receiving antennas 11, 12, 13, 14, 15 and a radar processor 20.

Three receiving antennas 11, 12, 14 of the five receiving antennas are arranged along one axis 31, a horizontal axis as shown in this Figure 3. In this example, the emitting antenna 10 is also arranged along the same horizontal axis 31. Three receiving antennas 13, 14, 15 of the five receiving antennas are arranged along another axis 32, a vertical axis as shown in Figure 3, which is essentially orthogonal to the axis 31.

The five receiving antennas are arranged in an L-shaped configuration, one of the receiving antennas 13 being common to both axes 31, 32, and being located between two other receiving antennas located, in this example, along the vertical axis 32.

As in the previous example, the receiving antenna 11 located closest to the emitting antenna 10 has cross-polarisation with respect to the emitting antenna 10, whereby coupling to the emitting antenna is minimised.

This receiving antenna 11 acts as shield for three of the other four receiving antennas 12,13, 14, but not for receiving antenna 15. For this reason, these other three receiving antennas 12,13, 14 have parallel polarisation to that of the emitting antenna 10, so as to maximise reception of the signal reflected from objects by parallel polarisation with the emitting antenna. The area providing shield for the other two receiving antennas has been depicted as the shielded area 110. The fifth receiving antenna 15 is located outside the shielded area 110, and is thus, not shielded by the receiving antenna 11 and has cross-polarisation with respect to the emitting antenna 11.

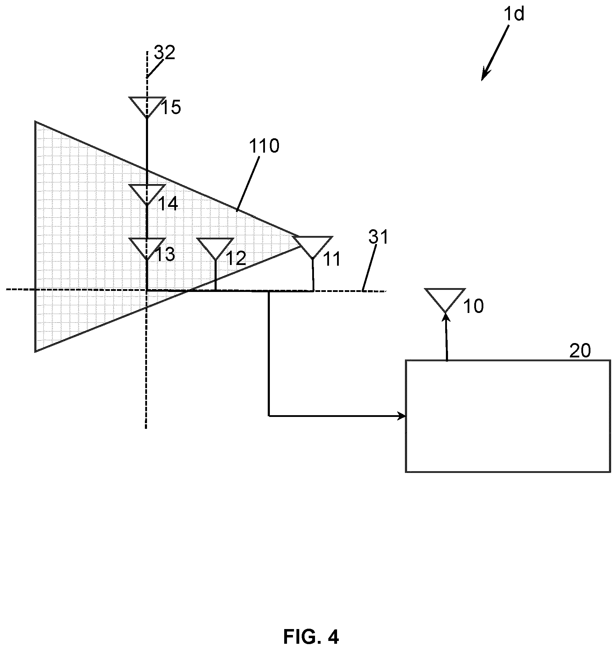

Figure 4 shows a block diagram of another possible example of radar system 1d. The radar system 1d is similar to the radar system 1c shown in Figure 3. A difference is that the emitting antenna 10 is not located in the same horizontal axis 31, and is thus not aligned with the receiving antennas 11 which acts as shield for the receiving antennas 12, 13, 14, 15. The remaining features of this radar system 1d also having an L-shaped configuration are the same or equivalent to those of the radar system 1c of Figure 3.

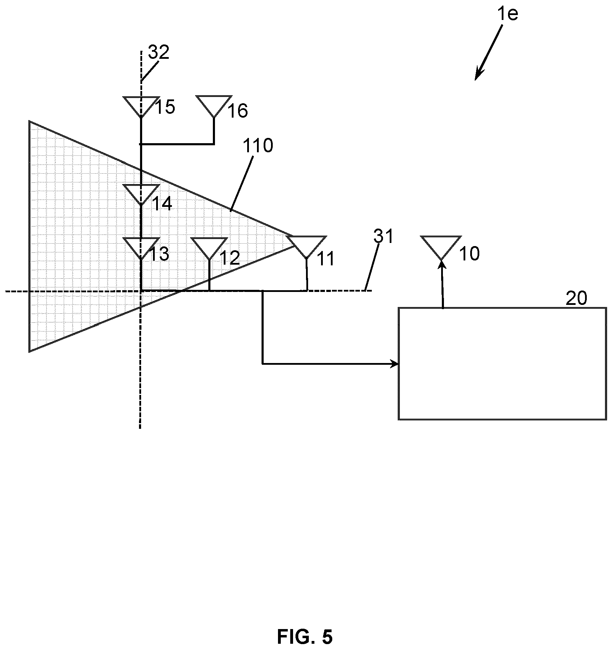

Figure 5 shows a block diagram of another possible example of radar system 1e. The radar system 1e is similar to the radar system 1c shown in Figure 3. A difference is that the radar system 1e comprises a further emitted antenna 16 which is not located on the same horizontal axis 31, and it is not located on the vertical axis 32 either. This further receiving antenna 16 is located outside the shielded area 110, and has cross-polarisation. When this further receiving antenna 16 is located inside the shielded area 110, it has parallel-polarisation with respect to the emitting antenna 10. The further receiving antenna 16 helps improving precision on the distance detection. The remaining features of this radar system 1e also having an L-shaped configuration are the same or equivalent to those of the radar system 1c of Figure 3.

Operation of the radar system of the present disclosure will be now explained in respect of the radar system 1c of Figure 3.

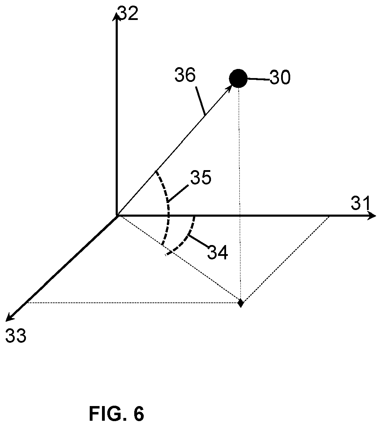

The emitting antenna 10 emits a signal, for example, an FMCW signal. This signal emitted by the transmitting antenna 10, also named emitted signal, is received by the five receiving antennas 11, 12, 13, 14, 15, after reflection by an object 30 (shown in Fig. 6). The receiving antenna 11 act as a shield antenna, and shades the coupling radiation from the emitting antenna 10 to the receiving antennas 12, 13 and 14. Receiving antenna 11 and 15 are cross-polarised and the coupling signal from the emitting antenna 10 is not detected by these two receiving antennas, and does not add to the noise N. The three receiving antennas 12, 13, 14 do not receive coupling signal from the emitting antenna 10 since they are shielded by the receiving antenna 11.

As already indicated, the signal reflected by the object 30 is received by the five receiving antennas, but the reflected signal is received differently at each receiving antenna. This object-reflected signal mainly maintains the polarisation of the signal sent by emitting antenna 10, and only a small part changes its polarisation. The receiving antennas 12, 13 14 receive the object-reflected signal maximised in polarisation orientation, so that the signal detected at the receiving antennas 12, 13, 14 maintains a maximum useful signal level S. In these receiving antennas 12, 13 and 14, the signal to noise ratio, SNR, is maximised in terms of maximum received level and minimum coupling.

Figure 6 schematically shows the 3D position (distance and two angles of arrival) of the object 30 as determined by the radar system, which radar system can be any of the radar systems 1b-1e shown in Figures 2-5 having five receiving antennas. In addition to the two orthogonal axes 31 and 32, a third axis 33 is shown in Figure; this axis 33 is orthogonal to axes 31, 32, and reflects the pointing direction of the receiving antennas. The receiving antennas (not shown) are located at the crossing point 3 of the three orthogonal axes 31, 32, 33 (or origin of a reference system made by axes 31, 32, 33).

The two angles of arrival determined by the radar system are: angle of arrival 34 or azimuth, determined by the receiving antennas located on axis 31, and angle of arrival 35 or elevation, determined by the receiving antennas on axis 32.

The distance between the antennas depends on the frequency of the signal emitted by the emitting antenna 10 (in some examples is greater than half the wavelength of the emitting signal) but is typically in the order of centimetres; the distance 36 from the antennas to the object 30 depends on the range of the radar system, but is typically in the order of several tens of metres.

A Fast Fourier Transform, FFT, algorithm is applied to the object-reflected signal, in order to identifying a distance frequency f_{d} at which the reflected signal is received determined by the distance 36 from the object 30 to the receiving antennas. This FFT algorithm is applied to the object-reflected signal received through the shielded receiving antennas 12, 13, 14.

Once the distance frequency f_{d} has been detected, a phase for each one of the object-reflected signals received through all the receiving antennas 11, 12, 13, 14, 15 is obtained by bandpass filtering the object-reflected signals received through all the receiving antennas. This bandpass filtering has a centre frequency corresponding to the identified distance frequency f_{d}. The width of the bandpass filter is typically dependant on the desired resolution on distance and velocity.

Once the phases for each of the receiving antennas have been obtained, the angles of arrival (AoA) 34, 35 of each of the reflected signals relative to the normal direction of axis 33 of the receiving antennas is determined based on the corresponding obtained phases.

A fact is that the object-reflected signal detected at the receiving antennas 11, 15 is low due to their cross-polarisation orientation, and therefore, has low SNR level. This once the distance frequency f_{d} has been determined (using the object-reflected signals from the shielded receiving antennas 12, 13, 14), bandpass filtering raises the SNR of the signal used in the phase measurement, thereby makes it possible to determine the angle of arrival, AoA, also for these cross-polarised receiving antennas.

The radar system 1c is a multi-static radar capable of detecting the distance and angles, that is, the 3D positioning of objects, especially, of objects having reflectance property which just slightly modifies the polarisation state of the emitted signal. By slightly modifying it is to be understood that the polarisation orientation of the object-reflected signal has a different polarization orientation compared to the parallel-polarisation orientation with respect to the emitted signal and its projection onto this parallel-polarisation orientation is greater than the projection onto the cross-polarized orientation with respect to the emitting antenna.

The same applies to the radar systems 1b, 1d, 1e shown in Figures 2, 4, 5, respectively.

An object having such reflectance property is a bird. Any of these radar systems is especially suitable when the objects to be detected are birds.

The radar system 1a shown in Figure 1 is capable of providing a 2D positioning of objects, by providing the angle of arrival.

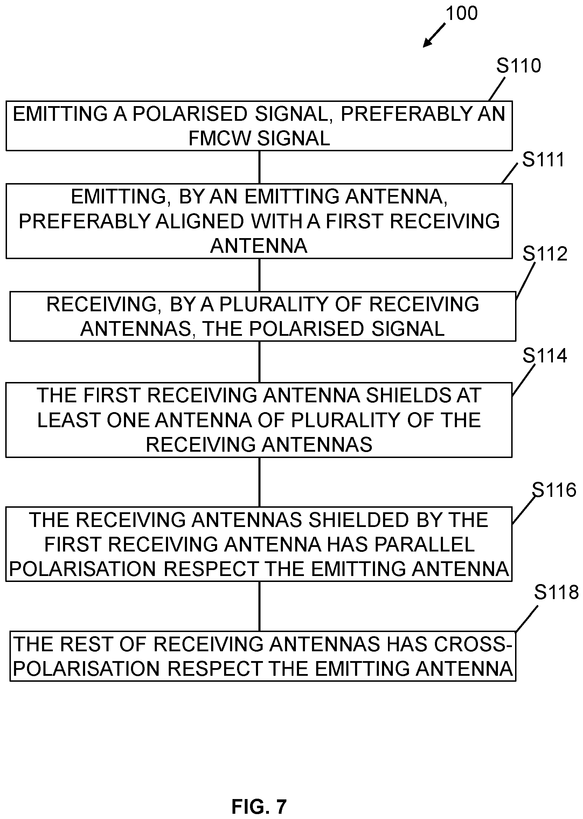

Figure 7 shows a flow diagram of a method for radar comprising the steps of:
- emitting a polarised signal (step S110);
- the emitting is carried out by an emitting antenna (step S111),
- receiving (step S112), by a plurality of receiving antennas comprising at least three antennas arranged in alignment in at least one axis, a signal reflected by an object.

A first receiving antenna of the plurality of receiving antennas shields (step S114) at least one of the plurality of receiving antennas from the emitted polarised signal.

The at least one receiving antenna shielded by the first receiving antenna has parallel-polarisation orientation (step S116) with respect to the emitting antenna, and the rest of receiving antennas has cross-polarisation orientation (step S118) with respect to the emitting antenna.

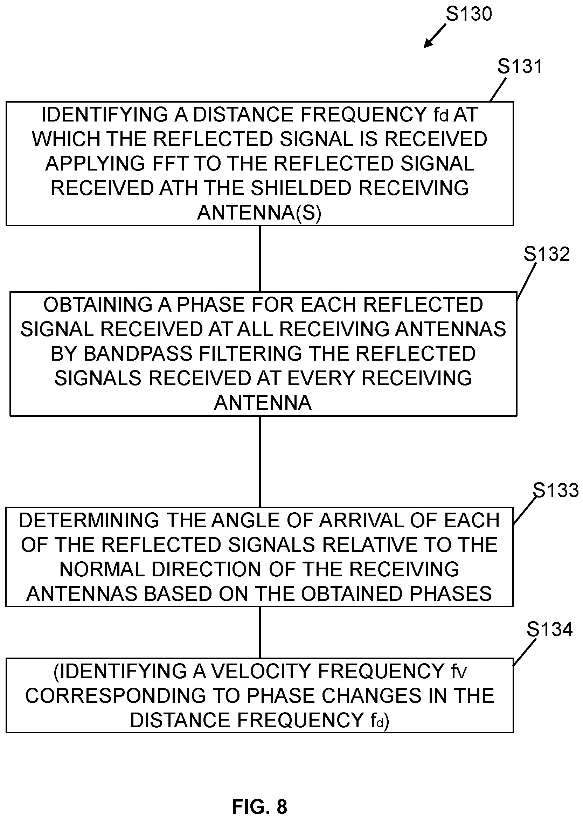

Figure 8 shows a flow diagram of the processing carried out by the radar processor, of the signals reflected by an object and received at each one of the receiving antennas to determine an angle of arrival (AoA) at each receiving antenna, which processing (step S130) comprises:
- identifying (step S131) a distance frequency (f_{d}) at which the reflected signal is received by applying a Fast Fourier Transform (FFT) algorithm to the reflected signals received through the at least one shielded receiving antennas;
- obtaining (step S132) a phase for each one of the reflected signals received through all the receiving antennas by bandpass filtering the reflected signals received through all the receiving antennas, the bandpass filtering having a centre frequency corresponding to the identified distance frequency (f_{d}); and
- determining (step S133) the angle of arrival (AoA) of each of the reflected signals relative to the normal direction of the receiving antennas (11-15) based on the obtained phases.

The processing may also comprise identifying (step S134) a further frequency (fᵥ) corresponding to phase changes in the distance frequency (f_{d}) due to the velocity of the object.

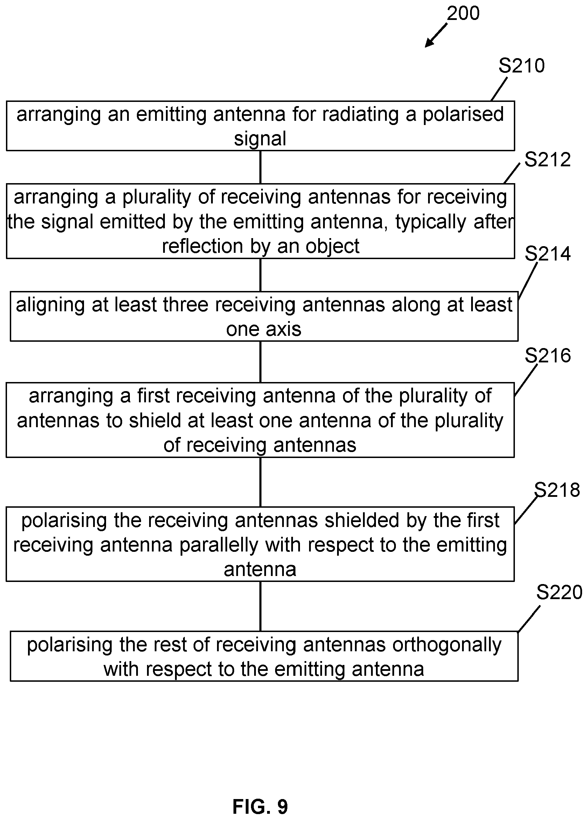

Figure 9 shows a flow diagram of a method for making a radar system, the method comprising:
- arranging (step S210) an emitting antenna for radiating a polarised signal,
- arranging (step S212) a plurality of receiving antennas for receiving the signal emitted by the emitting antenna;
- aligning (step S214) at least three receiving antennas along at least one axis;
- arranging (step S216) a first receiving antenna of the plurality of receiving antennas to shield at least one antenna of the plurality of receiving antennas;
- polarising (step S218) the receiving antennas shielded by the first receiving antenna parallelly with respect to the emitting antenna, and
- polarising (step S220) the rest of receiving antennas orthogonally with respect to the emitting antenna.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc. On the other hand, the disclosure is obviously not limited to the specific embodiment(s) or example(s) described herein, but also encompasses any variations that may be considered by any person skilled in the art (for example, as regards the choice of materials, dimensions, components, configuration, etc.), within the general scope of the invention as defined in the claims.

## Claims

1. A radar system (1a, 1b, 1c, 1d, 1e), comprising:
- an emitting antenna (10) configured for radiating a signal, the emitting antenna (10) being polarised;
- a plurality of receiving antennas (11, 12, 13, 14, 15) configured for receiving the signal emitted by the emitting antenna (10); and
- a radar processor (20) for analysing and processing the signal emitted by the emitting antenna (10) and the signals received at the plurality of receiving antennas (11, 12, 13, 14, 15);
wherein
- the plurality of receiving antennas (11, 12, 13, 14, 15) is aligned in at least one axis (31, 32);
- the plurality of receiving antennas (11, 12, 13, 14, 15) comprises at least three antennas, distributed along the at least one axis (31, 32);
- a first receiving antenna (11) of the plurality of receiving antennas (11, 12, 13, 14, 15) is arranged with respect to the emitting antenna (10) so as to shield at least one antenna of the rest of the plurality of receiving antennas (11, 12, 13, 14, 15);
- the at least one receiving antenna shielded by the first receiving antenna (11) has parallel-polarisation orientation with respect to the emitting antenna (10), and the rest of receiving antennas has cross-polarisation orientation with respect to the emitting antenna (10).

2. The radar system of claim 1, wherein the at least three receiving antennas in the at least one axis are distributed non-uniformly, and wherein a distance between two receiving antennas is preferably greater than half of the wavelength of the signal emitted by the emitting antenna (10).

3. The radar system of any one of the preceding claims, wherein the plurality of receiving antennas (11, 12, 13, 14, 15) comprises at least five antennas, which are arranged in two essentially orthogonal axes (31, 32).

4. The radar system of any one of the preceding claims, wherein the emitting antenna (10) is located on the at least one axis (31, 32).

5. The radar system of any one of the preceding claims, wherein the first receiving antenna (11) is one antenna of the plurality of receiving antennas (11-15) which is located closest to the emitting antenna (10).

6. The radar system of any one of claims 3-5, wherein one antenna of the receiving antennas is common to both orthogonal axes of the plurality of receiving antennas (11-15), and wherein the receiving antennas (11-15) are arranged in an L-shaped configuration or in a T-shaped configuration.

7. The radar system of any one of the preceding claims, wherein all of the receiving antennas except the first receiving antenna (11) are shielded by the first receiving antenna (11).

8. The radar system of any one of the preceding claims, wherein the signal emitted by the emitting antenna (10) is an RF signal, preferably a Frequency Modulated Continuous Wave (FMCW) signal.

9. The radar system of any one of claims 3-8, wherein the radar processor (20) is configured to carry out a Multi-Long Baseline Interferometry (MLBI) algorithm for providing one angle of arrival in case of at least one axis, and two angles of arrival in case of having two orthogonal axes, of an object located within an area covered by the radar system.

10. A method (100) for radar wherein the method comprises the steps of:
- emitting (S110) a polarised signal;
- receiving (S112), by a plurality of receiving antennas (11, 12, 13, 14, 15) comprising at least three antennas arranged in alignment in at least one axis (31, 32), a signal reflected by an object (30);
wherein
- the emitting (S111) is carried out by an emitting antenna (10),
- a first receiving antenna (11) of the plurality of receiving antennas shields (S114) at least one of the plurality of receiving antennas from the emitted polarised signal;
- the at least one receiving antenna shielded by the first receiving antenna (11) has parallel-polarisation orientation (S116) with respect to the emitting antenna (10), and the rest of receiving antennas has cross-polarisation orientation (S118) with respect to the emitting antenna (10).

11. The method (100) of claim 10, further comprising the steps of:
- processing (S130) by a radar processor (20), the signals reflected by an object and received at each one of the receiving antennas (11-15) to determine a distance and an angle of arrival (AoA); and
- determining a position of the object in at least two dimensions based on the determined distance and angle of arrival.

12. The method of any one of claims 10-11, wherein the step of processing the signals (S130) reflected by the object and received at each one of the receiving antennas (11-15) comprises:
- identifying (S131) a distance frequency (f_{d}) at which the reflected signal is received by applying a Fourier Transform (FT) algorithm to the reflected signals received through the at least one shielded receiving antennas;
- obtaining (S132) a phase for each one of the reflected signals received through all the receiving antennas by bandpass filtering the reflected signals received through all the receiving antennas, the bandpass filtering having a centre frequency corresponding to the identified frequency (f_{d}); and
- determining (S132) the angle of arrival (AoA) of each of the reflected signals relative to the normal direction of the receiving antennas (11-15) based on the obtained phases.

13. A method (200) for making a radar system (1a, 1b, 1c, 1d, 1e), the method comprising:
- arranging (S210) an emitting antenna (10) for radiating a polarised signal,
- arranging (S212) a plurality of receiving antennas (11, 12, 13, 14, 15) for receiving the signal emitted by the emitting antenna (10);
wherein the method comprises:
- aligning (S214) at least three receiving antennas (11, 12, 13, 14, 15) along at least one axis (31, 32);
- arranging (S216) a first receiving antenna (11) of the plurality of receiving antennas (11, 12, 13, 14, 15) to shield at least one antenna of the plurality of receiving antennas;
- polarising (S218) the receiving antennas shielded by the first receiving antenna (11) parallelly with respect to the emitting antenna (10), and
- polarising (S220) the rest of receiving antennas orthogonally with respect to the emitting antenna (10).

14. The method of claim 13, wherein aligning at least three receiving antennas (11, 12, 13, 14, 15) along at least one axis (31, 32) comprises aligning at least five antennas in two essentially orthogonal axes (31, 32).

15. The method of any one of claims 10-14, wherein the emitting antenna (10), the first receiving antenna (11) and the plurality of receiving antennas (11-15) are according to the radar system of any one of claims 1-9.
